(19) Europäisches Patentamt / European Patent Office / Office européen des brevets

(11) **EP 4 287 300 A1**

(12) **EUROPEAN PATENT APPLICATION**
published in accordance with Art. 153(4) EPC

(43) Date of publication:
**06.12.2023 Bulletin 2023/49**

(21) Application number: **22746310.6**

(22) Date of filing: **28.01.2022**

(51) International Patent Classification (IPC):
$H01M\ 4/13^{(2010.01)}$    $H01M\ 4/62^{(2006.01)}$
$H01M\ 4/133^{(2010.01)}$    $H01M\ 4/04^{(2006.01)}$
$H01M\ 4/139^{(2010.01)}$    $H01M\ 4/66^{(2006.01)}$
$H01M\ 4/02^{(2006.01)}$

(52) Cooperative Patent Classification (CPC):
H01M 4/02; H01M 4/04; H01M 4/13; H01M 4/133;
H01M 4/139; H01M 4/62; H01M 4/66

(86) International application number:
**PCT/KR2022/001660**

(87) International publication number:
**WO 2022/164284 (04.08.2022 Gazette 2022/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.01.2021 KR 20210013322**
        **29.01.2021 KR 20210013324**

(71) Applicant: **Lg Chem, Ltd.**
**Seoul 07336 (KR)**

(72) Inventors:
• **LEE, Geun Sung**
**Daejeon 34122 (KR)**

• **LEE, Il Ha**
**Daejeon 34122 (KR)**
• **SONG, In Taek**
**Daejeon 34122 (KR)**
• **PARK, Jin Woo**
**Daejeon 34122 (KR)**
• **KIM, Ki Hwan**
**Daejeon 34122 (KR)**
• **LEE, Ho Chan**
**Daejeon 34122 (KR)**
• **HAHM, Yun Hye**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ELECTRODE**

(57)   The present application relates to an electrode comprising a current collector and an active material layer, which can provide an electrode capable of securing high levels of interparticle adhesion force and adhesion force between the active material layer and the current collector relative to the binder content in the active material layer. Through this, it is also possible to provide a secondary battery having excellent performance, and the like, while having a high capacity.

Fig. 3

EP 4 287 300 A1

**Description**

**Technical Field**

This application claims the benefit of priority based on Korean Patent Application No. 10-2021-0013324 filed on January 29, 2021 and Korean Patent Application No. 10-2021-0013322 filed on January 29, 2021, the disclosures of which are incorporated herein by reference in their entirety.

The present application relates to an electrode.

**Background Art**

The application area of energy storage technology expands to mobile phones, camcorders, notebook PCs, electric vehicles, and the like.

One of the research fields of energy storage technology is a secondary battery capable of charging and discharging, and research and development for improving the capacity density and specific energy of such a secondary battery are conducted.

An electrode (positive electrode or negative electrode) applied to a secondary battery is usually manufactured by forming an active material layer comprising an electrode active material and a binder on a current collector.

In order to smoothly induce the inter-active material electron movement, and the electron movement between the current collector and the active material layer in the electrode of the secondary battery, the adhesion force between the active material particles, and the adhesion force between the active material layer and the current collector must be secured.

When the adhesion force between the particles in the active material layer is insufficient, a phenomenon that the particles fall off from the electrode may occur, where such a phenomenon deteriorates the stability and performance of the battery. For example, particles falling off due to insufficient adhesion force between particles from the surfaces of the negative electrode and the positive electrode may cause a microshort or the like inside the battery, thereby causing deterioration of performance and a fire due to a short circuit.

When the adhesion force between the active material layer and the current collector is lowered, the movement speed of electrons between the active material layer and the current collector is reduced, which may also cause deterioration of the speed characteristics and cycle characteristics.

Therefore, attempts, which are intended to introduce a large amount of the binder into the active material layer, have been made in order to increase adhesion force between particles in the active material layer or adhesion force between the active material layer and the current collector.

However, in this case, the ratio of the active material decreases as the ratio of the binder increases, so that there are problems such as performance deterioration and capacity deterioration of the battery due to an increase in electrode resistance, and a decrease in conductivity, and the like.

**Disclosure**

**Technical Problem**

The present application relates to an electrode. It is one object of the present application to provide an electrode comprising a current collector and an active material layer, wherein the electrode can secure a high level of inter-particle adhesion force and adhesion force between the active material layer and the current collector compared to the binder content in the active material layer. It is another object of the present application to provide a secondary battery having excellent performance, and the like, while having a high capacity.

**Technical Solution**

Among the physical properties mentioned in this specification, physical properties in which the measurement temperature affects results are results measured at room temperature, unless otherwise specified.

The term room temperature is a natural temperature without warming or cooling, which means, for example, any one temperature within the range of 10°C to 30°C, or a temperature of about 23°C or about 25°C or so.

In this specification, the unit of temperature is Celsius (°C), unless otherwise specified.

The term normal pressure is a natural pressure without pressurizing or depressurizing, which usually means an atmospheric pressure at the atmospheric pressure level, and means, for example, an atmospheric pressure of about 740 to 780 mmHg or so.

In the case of a physical property in which the measurement humidity affects results, the relevant physical property is a physical property measured at natural humidity that is not specifically controlled at the room temperature and/or normal pressure state.

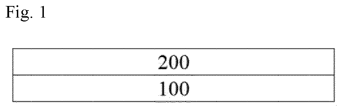

The electrode of the present application may comprise a current collector; and an active material layer present on one side or both sides of the current collector. Figure 1 is a cross-sectional diagram of an exemplary electrode, and shows a structure comprising a current collector (100) and an active material layer (200) on one side thereof. In the electrode structure, the active material layer may also be formed in contact with the surface of the current collector, or another layer may also exist between the current collector and the active material layer.

The electrode of the present application may secure high adhesion force between particles in the active material layer, and may simultaneously secure high adhesion force between the active material layer and the current collector as compared to the binder content in the active material layer, through controlling the distribution of the binder in the active material layer, particularly the distribution of the binder in the active material layer adjacent to the current collector.

The active material layer comprises an electrode active material and a binder, where the adhesion force is expressed by the binder. Therefore, the approach of the prior art for securing the adhesion force was one that wetting properties of the binder to the current collector were improved by increasing the amount of the introduced binder and/or increasing the affinity between the binder and the current collector, whereby the binder was evenly distributed on the entire region of the current collector surface. However, this approach method has a problem that as the amount of the binder increases, the amount of the active material that can be introduced decreases, whereby the battery performance and capacity are lowered, or the ratio of the binder that can contribute to improving the actual adhesion force of the binder on the entire region of the current collector surface is lowered.

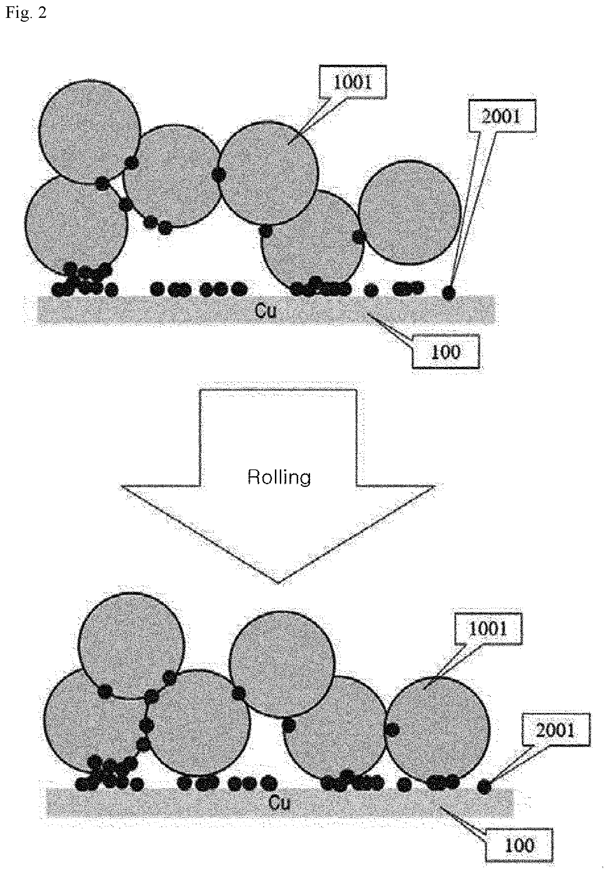

For example, as conceptually shown in Figure 2, the electrode active material (1001) normally present in the active material layer has a larger particle diameter relative to the binder (2001). In this state, for example, when the binder (2001) is evenly distributed on the current collector (100) by a method of increasing the affinity of the current collector with the binder, or the like, the probability that the binder (2001) on the current collector (100) and the electrode active material (1001) will contact may be reduced. That is, among the binders distributed on the current collector, the proportion of the binder that does not contribute to the improvement of the adhesion force increases. As the proportion of the binder that does not contribute to the improvement of the adhesion force is increased, the amount of the binder to be introduced to implement the desired adhesion force increases, and accordingly, the amount of the electrode active material that can be introduced into the active material layer decreases. This may lead to an increase in electrode resistance, a decrease in electrical conductivity, performance deterioration and capacity deterioration of the battery, and the like.

The present inventors have confirmed that such a problem can be solved by controlling the distribution of the binder for each position on the surface of the current collector. Unlike the prior art, which is intended to improve the adhesion force by simply increasing the amount of the binder and/or increasing the affinity between the binder and the current collector surface, and the like, it has confirmed in the electrode of the present application that the ratio of the binder that can contribute to improving adhesion force can be increased by repeatedly disposing regions where the binder is largely distributed and regions where it is slightly or not distributed, and accordingly, the adhesion force between particles in the active material layer and the adhesion force between the active material layer and the current collector relative to the binder content can be greatly improved. In addition, through this, it is also possible to provide a secondary battery having excellent performance, while having a high capacity, and the like.

In the electrode of the present application, for example, after a standard peel test, the occupied area ratio of the binder according to the position along one direction on the current collector surface may show a wave graph. For example, when an arbitrary point on the current collector surface after the standard peel test is set as a starting point, the one direction may mean at least one of right, left, up and/or down directions from the starting point, and the wave graph may also appear for one, or two or more directions from the starting point.

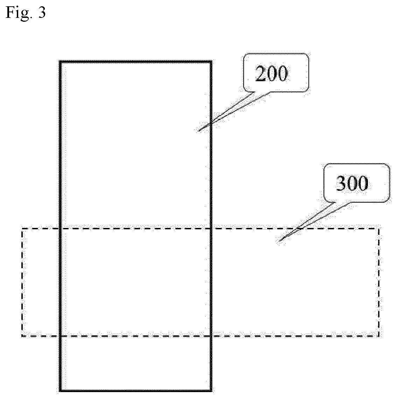

The standard peel test is performed using 3M's Scotch Magic tape Cat. 810R. In order to perform the standard peel test, first, the electrode is cut to a size of 20 mm or so in width and 100 mm or so in length. The Scotch Magic tape Cat. 810R is cut so that the horizontal length is 10 mm and the vertical length is 60 mm. Thereafter, as shown in Figure 3, the Scotch Magic tape Cat. 810R (300) is attached on the active material layer (200) of the electrode in a cross state. The attachment may be performed so that a certain portion of the Magic tape Cat. 810R (300) protrudes. Then, the protruding portion is hold, and the magic tape Cat. 810R (300) is peeled off. At this time, the peel rate and the peel angle are not particularly limited, but the peel rate may be about 20mm/sec or so, and the peel angle may be about 30 degrees or so. In addition, regarding the attachment of the Scotch Magic tape Cat. 810R (300), it is attached by reciprocating and pushing the surface of the tape with a roller having a weight of 1kg or so, and a radius and width of 50mm and 40mm, respectively, once after attaching the tape.

Through the above process, when the Scotch Magic tape Cat. 810R (300) is peeled off, the component of the active material layer (200) is peeled off together with the Scotch Magic tape Cat. 810R (300). Subsequently, the above process is repeated using the new Scotch Magic tape Cat. 810R (300).

The standard peel test may be performed by performing this process until the components of the active material layer (200) do not come off on the Scotch Magic tape Cat. 810R (300) and thus are not observed.

Regarding the matter that no component of the active material layer (200) comes off on the Scotch Magic tape Cat. 810R (300), when the surface of the Scotch Magic tape peeled from the active material layer is compared with the surface of the unused Scotch Magic tape so that the tones of both are substantially the same, it may be determined that the component of the active material layer does not come off (visual observation).

A specific way to run the standard peel test is described in Examples.

The occupied area ratio of the binder may be, for example, a value measured by dividing a region where the binder exists and a region where the binder does not exist with respect to an image obtained by photographing an arbitrary region of the current collector surface after the standard peel test, and calculating the area ratio of the region where the binder exists in the arbitrary region relative to the area of the arbitrary region. In the present application, the region where the binder exists and the region where it does not exist can be distinguished based on brightness using, for example, Trainable Weka Segmentation Plug-in of Image J software (manufacturer: Image J). In the present application, the specific measurement of the binder occupied area ratio may follow the method described in the following examples.

The wave graph may mean, for example, a graph depicted by setting an arbitrary point on the current collector sample surface obtained after performing a standard peel test on the electrode of the present application as a starting point to measure a binder occupied area ratio from the starting point along at least one direction (e.g., right direction, left direction, up direction and/or down direction), and setting the distance (position) of the measurement region from the starting point as the x-axis, and the binder occupied area ratio as the y-axis.

In this specification, the term wave graph may mean a graph showing a trend that when the position (distance of the measurement region from the starting point) has been set as the x-axis and the binder occupied area ratio has been set as the y-axis, the binder occupied area ratio increases, and decreases, and then increases again, as the value of the x-axis increases. That is, in this specification, when the occupied area ratio of the binder shows the above trend, the relevant graph may be defined as a wave graph even though it is not necessarily in the form of an ideal wavelength graph.

In the present application, when the arithmetic average value of the binder occupied area ratio measured for each position is set as a, the term average line may mean, for example, a line represented by y=a on the graph. The arithmetic average value of the binder occupied area ratio measured for each position may mean, for example, a value obtained by dividing the sum of the respective binder occupied area ratios measured for each position by the total number of positions.

In the present application, the term crest may mean a region having the largest binder occupied area ratio among regions corresponding to upward directions of the average value (portions having binder occupied area ratios greater than the average value). When two or more regions having the largest occupied area ratio of the binder exist within one wavelength unit, the region having the largest x-axis value among them is called a crest. In the present application, the term valley may mean a region having the smallest binder occupied area ratio among regions corresponding to downward directions of the average value (portions having binder occupied area ratios smaller than the average value). When two or more regions having the smallest occupied area ratio of the binder exist within one wavelength unit, the region having the largest x-axis value among them is called a crest. In the present application, crests and valleys cannot exist together, two or more crests cannot exist, and two or more valleys cannot exist, within one wavelength unit. That is, only one crest or only one valley may exist within one wavelength unit of the present application.

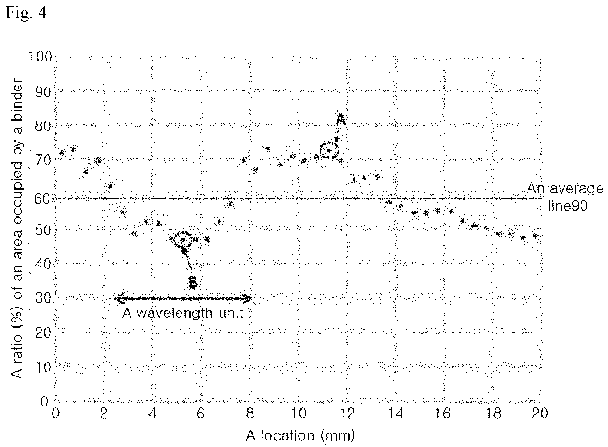

In the present application, the term wavelength unit may mean a region from an arbitrary point where the wave graph and the average line intersect to the nearest intersection point in one direction (left or right direction) (see Figure 4).

In the present application, the term wavelength may mean a distance between a valley and an adjacent valley and/or a distance between a crest and an adjacent crest.

In this specification, the fact that the occupied area ratio of the binder according to the position represents a wave graph may mean that, for example, regions with a relatively high binder occupied area ratio and regions with a relatively low ratio are repeatedly arranged according to the position of the current collector surface. Figure 4 shows one example of a wave graph showing binder occupied area ratios measured for each position with respect to the electrode of the present application. The wave graph of the present application may be a graph derived for at least one direction from an arbitrary point on the current collector surface. Here, the one direction may mean the left, right, up and/or down direction, and all graphs derived for the left, right, up, and down directions may represent wave graphs.

As the electrode of the present application controls the distribution of the binder so that such occupied area ratios of the binder according to the positions show a wave graph having crests and valleys, an effective adhesion area between the electrode active material in the active material layer and the binder may be increased upon packing of the active material layer, and accordingly the adhesion force between the active material layer and the current collector, or between the electrode active materials may be improved.

In this specification, the occupied area ratio of the binder in the crest portion of the wave graph may be, for example, 55% or more or so. In another example, the occupied area ratio of the binder in the crest portion may be 56% or more or so, 57% or more or so, 58% or more or so, 59% or more or so, 60% or more or so, 61% or more or so, 62% or more or so, 63% or more or so, 64% or more or so, 65% or more or so, 66% or more or so, 67% or more or so, 68% or more or so, 69% or more or so, 70% or more or so, 71% or more or so, or 72% or more or so, or may be 90% or less or so, 85% or less or so, 80% or less or so, or 75% or less or so.

In this specification, the occupied area ratio of the binder in the valley portion of the wave graph may be, for example, 50% or less or so. In another example, the occupied area ratio of the binder in the valley portion may be 49% or less or so, 48% or less or so, or 47% or less or so, or may be 10% or more or so, 15% or more or so, 20% or more or so, 25% or more or so, 30% or more or so, 35% or more or so, 40% or more or so, or 45% or more or so.

In the electrode of the present application, for example, the difference between the maximum value of the occupied area ratio of the binder and the minimum value of the occupied area ratio of the binder in the wave graph (hereinafter, described as the difference between the maximum value and the minimum value) may be 9%p or more. The term %p (percent point) means the arithmetic difference between two percentages. In another example, the difference between the maximum value and the minimum value may be 10%p or more, 11%p or more, 12%p or more, 13%p or more, 14%p or more, 15%p or more, 16%p or more, 17%p or more, 18%p or more, 19%p or more, 20%p or more, 21%p or more, 22%p or more, 23%p or more, 24%p or more, 25%p or more, or 26%p or more. The upper limit of the difference between the maximum value and the minimum value is not particularly limited, but may be 60%p or less, 55%p or less, 50%p or less, 45%p or less, 40%p or less, 35%p or less, or 30%p or less.

In the present application, the wavelength of the wave graph may be, for example, within a range of 3mm to 25mm. As described above, the wave graph of the present application may not be in an ideal shape, and thus the respective wavelengths of the wave graph may be the same or different from each other. In the present application, in another example, the wavelength of the wave graph may be 4mm or more, 5mm or more, 6mm or more, 7mm or more, 8mm or more, 9mm or more, or 10mm or more, or may be 20mm or less, 19mm or less, 18mm or less, 17mm or less, or 16mm or less.

As described above, the control of the binder behavior such that the occupied area ratio of the binder according to the position along an arbitrary direction on the current collector surface shows a wave graph is different from the concept of the prior art that is intended to secure adhesion force by improving the wetting properties of the binder to the current collector. It is different from the concept of the prior art. Although the reason why the binder exhibits the above-described behavior is not clearly clarified in the present application, the present applicant has confirmed that the behavior of the binder on the current collector surface can be controlled as above through control of the composition of the slurry and/or the surface characteristics of the current collector, to be described below, and the like, and by controlling the binder behavior as described above, it is capable of increasing the probability of contact between the components such as electrode active material particles forming the active material layer and the binder during the electrode manufacturing process, properly distributing the effective adhesion regions, and achieving the appropriate spreading during the rolling process. Through this, the electrode of the present application can secure a high level of inter-particle adhesion force and adhesion force between the active material and the current collector relative to the binder content in the active material layer, and through this, it is possible to provide a secondary battery having excellent performance, while having a high capacity, and the like.

In the electrode of the present application, for example, a region where the occupied area ratio of the binder on the current collector surface after the standard peel test is 60% or more, and it satisfies Equation 1 below, may exist.

[Equation 1]

$$18 \leq A/W$$

In Equation 1, A may be a ratio (unit: %) of an occupied area of a particulate binder, and W may be the content (weight%) of the binder in the active material layer. In Equation 1, the unit of A may be %, and the unit of W may be weight%. Therefore, the unit of A/W in Equation 1 may be $wt^{-1}$ (weight$^{-1}$).

When the composition of the slurry in the electrode manufacturing process is known, the content of the binder in the active material layer may be substantially the same as the content ratio of the binder in the solid content (part excluding the solvent) of the relevant slurry. In addition, when the composition of the slurry in the electrode manufacturing process is not known, the content of the binder may be confirmed through TGA (thermogravimetric analysis) analysis of the active material. For example, when an SBR (styrene-butadiene rubber) binder is applied as the binder, the content of the binder may be confirmed through the content of the SBR binder obtained from the 370°C to 440°C decrease in the temperaturemass curve obtained by performing the TGA analysis of the active material layer, and increasing the temperature at a rate of 10°C per minute.

In another example, the A/W in Equation 1 may be 19 $wt^{-1}$ or more, 20 $wt^{-1}$ or more, 21 $wt^{-1}$ or more, 22 $wt^{-1}$ or more, 23 $wt^{-1}$ or more, 24 $wt^{-1}$ or more, 25 $wt^{-1}$ or more, 26 $wt^{-1}$ or more, 27 $wt^{-1}$ or more, 28 $wt^{-1}$ or more, 29 $wt^{-1}$ or

more, 30 wt$^{-1}$ or more, 31 wt$^{-1}$ or more, 32 wt$^{-1}$ or more, 33 wt$^{-1}$ or more, 34 wt$^{-1}$ or more, 35 wt$^{-1}$ or more, 36 wt$^{-1}$ or more, or 37 wt$^{-1}$ or more. The upper limit of the A/W is not particularly limited, but may be 80 wt$^{-1}$ or less, 75 wt$^{-1}$ or less, 70 wt$^{-1}$ or less, 65 wt$^{-1}$ or less, 60 wt$^{-1}$ or less, 55 wt$^{-1}$ or less, 50 wt$^{-1}$ or less, 45 wt$^{-1}$ or less, or 40 wt$^{-1}$ or less.

By controlling the A/W ratio of Equation 1 as described above, the present application can provide an electrode having excellent adhesion force between active materials and/or between a current collector and an active material layer relative to a binder content.

The type of the current collector applied in the present application is not particularly limited, where a known current collector may be used. In order to implement the binder behavior, such as the above-described wave graph, and the like, the surface characteristics (water contact angle, etc.) of the current collector may be controlled, as described below. As the current collector, for example, a film, sheet, or foil made of one or more selected from the group consisting of stainless steel, aluminum, nickel, titanium, baked carbon, copper, carbon, stainless steel surface-treated with nickel, titanium or silver, and an aluminum-cadmium alloy may be used. In order to realize the desired binder distribution, one having surface characteristics to be described below may be selected from the current collectors, or the surface characteristics may be adjusted by additional treatment.

The thickness and shape of the current collector, and the like are not particularly limited, where an appropriate type may be selected within a known range.

The active material layer formed on the current collector basically may comprise an electrode active material and a binder.

A known material may be used as the binder, and components known to contribute to bonding of components such as the active material in the active material layer and bonding of the active material layer and the current collector may be used. As the applicable binder, one, or a combination of two or more selected from the group consisting of PVDF (poly(vinylidene fluoride)), PVA (poly(vinyl alcohol)), polyvinylpyrrolidone, tetrafluoroethylene, polyethylene, polypropylene, an ethylene-propylene-diene terpolymer (EPDM), a sulfonated EPDM, SBR (styrene-butadiene rubber), and fluororubber may be used.

In order to achieve the purpose of the present application more effectively, it is appropriate to use a particulate binder as the binder, and for example, it is appropriate to use a particulate binder having an average particle diameter of 50 to 500nm or so. In this specification, the term average particle diameter may mean a value measured according to the following examples for one particulate binder (or particulate active material), mean a value measured according to the following example for a mixture of two or more particulate binders (or mixture of particulate active materials), or mean a value calculated from values measured according to the following examples for two or more particulate binders (or particulate active materials), respectively in consideration of their weight fractions. For example, when a particulate binder (or particulate active material) having an average particle diameter of D1 is present in a weight of W1 and a particulate binder (or particulate active material) having an average particle diameter of D2 is present in a weight of W2, the average particle diameter D may be defined as $D=(D1 \times W1+D2 \times W2)/(W1+W2)$. Upon the above confirmation, the particle diameters D1 and D2, and the weights W1 and W2 are values of the same unit as each other, respectively. In another example, the average particle diameter of the particulate binder may be 70 nm or more, 90 nm or more, 110 nm or more, 130 nm or more, or 140 nm or more, or may also be 450 nm or less, 400 nm or less, 350 nm or less, 300 nm or less, 250 nm or less, or 200 nm or less or so.

In addition, for implementation of the desired binder distribution or the like, it may be advantageous to use a binder having a solubility parameter in a range to be described below as the binder.

In the present application, it is possible to secure a high level of adhesion force while including a relatively small proportion of the binder in the active material layer. For example, the ratio of the binder in the active material layer may be about 0.5 to 10 weight%. In another example, the ratio may also be further controlled within a range of 1 weight% or more, 1.5 weight% or more, 2 weight% or more, 2.5 weight% or more, 3 weight% or more, 3.5 weight% or more, or 4 weight% or more or so and/or within a range of 9.5 weight% or less, 9 weight% or less, 8.5 weight% or less, 8 weight% or less, 7.5 weight% or less, 7 weight% or less, 6.5 weight% or less, 6 weight% or less, 5.5 weight% or less, 5 weight% or less, 4.5 weight% or less, 4 weight% or less, 3.5 weight% or less, 3 weight% or less, or 2 weight% or less or so. The method of confirming the ratio (content) of the binder in the active material layer is as described above.

The electrode active material included in the active material layer may be a positive active material or a negative active material, and the specific type is not particularly limited. For example, as the positive electrode active material, active materials including $LiCoO_2$, $LiNiO_2$, $LiMn_2O_4$, $LiCoPO_4$, $LiFePO_4$, $LiNiMnCoO_2$ and $LiNi_{1-x-y-z}Co_x1_yM2_zO_2$ (M1 and M2 are each independently any one selected from the group consisting of Al, Ni, Co, Fe, Mn, V, Cr, Ti, W, Ta, Mg, and Mo, and x, y and z are each independently an atomic fraction of oxide composition elements, satisfying $0 \leq x < 0.5$, $0 \leq y < 0.5$, $0 \leq z < 0.5$, $0 < x+y+z \leq 1$), and the like may be used, and as the negative active material, active materials including one or more selected from the group consisting of natural graphite, artificial graphite, carbonaceous materials; lithium-containing titanium composite oxides (LTO), Si, Sn, Li, Zn, Mg, Cd, Ce, Ni or Fe metals (Me); alloys composed of the metals (Me); oxides (MeOx) of the metals (Me); and composites of the metals (Me) with carbon may be used.

For implementation of the appropriate binder distribution, or the like, it is appropriate to use a particulate active material as an electrode active material, and for example, it is appropriate to use one having an average particle diameter of 1 to 100µm or so. The average particle diameter may be measured or calculated according to the above-described method. In another example, the average particle diameter of the particulate active material may be 5 µm or more, 10 µm or more, or 15 µm or more, or may also be 90 µm or less, 80 µm or less, 70 µm or less, 60 µm or less, 50 µm or less, 40 µm or less, or 30 µm or less, 25 µm or less, or 20 µm or less or so.

For implementation of the appropriate binder distribution, or the like, the particle diameter relation between the particulate binder and the active material may be adjusted. For example, the ratio (D1/D2) of the average particle diameter (D1, unit nm) of the particulate electrode active material to the average particle diameter (D2, unit nm) of the particulate binder may be in the range of 10 to 1,000. In another example, the ratio (D1/D2) may be 20 or more, 30 or more, 40 or more, 50 or more, 60 or more, 70 or more, 80 or more, 90 or more, 100 or more, 110 or more, 120 or more, or 130 or more, or may be 900 or less, 800 or less, 700 or less, 600 or less, 500 or less, 400 or less, 300 or less, 200 or less, or 150 or less or so.

Meanwhile, for the rolled active material layer, the average particle diameter of the particulate binder and the active material mentioned in this specification means, in the case of a rolled electrode active material layer, the average particle diameter before rolling.

In the present application, by lowering the binder content ratio in the active material layer, a relatively large amount of the active material may be included, and through this, it is possible to provide an electrode having excellent adhesion force.

For example, the active material in the active material layer may be in the range of 1000 to 10000 parts by weight relative to 100 parts by weight of the binder. In another example, the ratio may be 1500 parts by weight or more, 2000 parts by weight or more, 2500 parts by weight or more, 3000 parts by weight or more, 3500 parts by weight or more, 4000 parts by weight or more, or 4500 parts by weight or more, or may also be 9500 parts by weight or less, 9000 parts by weight or less, 8500 parts by weight or less, 8000 parts by weight or less, 7500 parts by weight or less, 7000 parts by weight or less, 6500 parts by weight or less, 6000 parts by weight or less, or 5500 parts by weight or less or so.

The active material layer may also further comprise other necessary components in addition to the above components. For example, the active material layer may further comprise a conductive material. As the conductive material, for example, a known component may be used without any particular limitation, as long as it exhibits conductivity without causing chemical changes in the current collector and the electrode active material. For example, as the conductive material, one or a mixture of two or more selected from graphite such as natural graphite or artificial graphite; carbon black such as carbon black, acetylene black, ketjen black, channel black, furnace black, lamp black, or summer black; a conductive fiber such carbon fiber or metal fiber; a carbon fluoride powder; a metal powder such as an aluminum powder, or a nickel powder; a conductive whisker such as zinc oxide or potassium titanate; a conductive metal oxide such as titanium oxide; a polyphenylene derivative, and the like may be used.

The content of the conductive material is controlled as necessary, without being particularly limited, but it may be usually included in an appropriate ratio within the range of 0.1 to 20 parts by weight or 0.3 to 12 parts by weight relative to 100 parts by weight of the active material. A method of determining the content of the conductive material to an appropriate level in consideration of the cycle life of the battery, and the like is known.

The active material layer may also comprise other necessary known components (e.g., thickeners such as carboxymethyl cellulose (CMC), starch, hydroxypropyl cellulose or regenerated cellulose, etc.) in addition to the above components.

The thickness of the active material layer is not particularly limited, which may be controlled to have an appropriate level of thickness in consideration of desired performance. The thickness of the active material layer may mean, for example, the thickness of the active material layer after performing rolling to be described below. The thickness of the active material layer may be, for example, in the range of about 10 to 500 µm. In another example, the thickness may be about 30 µm or more, 50 µm or more, 70 µm or more, 90 µm or more, or 100 µm or more, or may also be about 450 µm or less, 400 µm or less, 350 µm or less, 300 µm or less, 250 µm or less, 200 µm or less, or 150 µm or less or so.

The active material layer may be formed to have a certain level of porosity. The porosity is usually controlled by rolling during the manufacturing process of the electrode. The active material layer may have a porosity of about 35% or less or so. The porosity may also be further adjusted in the range of 33% or less, 31% or less, 29% or less, or 27% or less and/or in the range of 5% or more, 7% or more, 9% or more, 11% or more, 13% or more, 15% or more, 17% or more, 19% or more, 21% or more, 23% or more, or 25% or more. The rolling process controlled to have the porosity may contribute to the realization of the binder distribution having a wave graph or the like, which is the purpose of the present application. Here, the porosity, for example, the porosity of the rolled active material layer may be calculated by comparing the ratio of the difference between the real density of the active layer and the density after rolling, where such a method is known.

The above-described electrode may be manufactured in a manner to be described below. In general, the electrode is manufactured by coating the slurry on the current collector, drying it, and then performing a rolling process. In the present application, by controlling the compositions of the slurry, the surface characteristics of the current collector on which the slurry is coated, drying conditions and/or rolling conditions in the above process, it is possible to achieve the desired distribution of the binder.

Therefore, the manufacturing method of the present application may comprise at least a step of forming a layer of a slurry on a current collector. In this case, the slurry may comprise at least a solvent, a binder, and an electrode active material.

In the manufacturing method of the present application, as a slurry, one that a relatively hydrophobic binder is dispersed in a certain amount in a relatively polar solvent may be applied.

In the manufacturing method of the present application, a layer is formed on the current collector with such a slurry. At this time, the method of forming the layer of the slurry is not particularly limited, and for example, the layer may be formed by a known coating method. The reason is not clear, but when the same slurry of the following composition is coated on the current collector, it is expected that the dispersion state of the binder in the slurry, the affinity of the solvent of the slurry with the current collector surface, the affinity of the current collector surface with the binder in the slurry and/or the particle diameter relationship between the particulate materials in the case where they are applied, and the like are mutually combined with each other to control the position of the binder in the desired form.

For example, the affinity of the solvent with the current collector surface affects the contact angle of the solvent on the current collector surface, where the contact angle may form a force in a certain direction in the slurry due to capillary action or the like upon evaporation of the solvent. The affinity of the binder with the solvent and the amount of the binder (also, the particle diameter in the case of the particulate binder) affect the dispersion state of the binder in the slurry, and the affinity of the binder with the current collector surface affects the dispersion state of the binder in the slurry, or the binder distribution shape into the current collector surface, and the like.

In the present application, it has been confirmed that the desired arrangement of the binder is achieved through the dispersion state of the binder and the evaporation aspect of the solvent when the slurry of the compositions to be described below has been formed on the current collector having the surface characteristics to be described below, and the shear force in the slurry generated thereby.

For example, the slurry applied to the manufacturing process may comprise a solvent. As the solvent, one capable of properly dispersing the slurry components such as the electrode active material is usually applied, and an example thereof is exemplified by water, methanol, ethanol, isopropyl alcohol, acetone, dimethyl sulfoxide, formamide and/or dimethylformamide, and the like.

In the present application, it may be necessary to use a solvent having a dipole moment of approximately 1.3D or more in the solvents. In another example, the dipole moment of the solvent may be further controlled in the range of about 1.35 D or more, 1.4 D or more, 1.45 D or more, 1.5 D or more, 1.55 D or more, 1.6 D or more, 1.65 D or more, 1.7 D or more, 1.75 D or more, 1.8 D or more, or 1.85 D or more or so and/or in the range of 5 D or less, 4.5 D or less, 4 D or less, 3.5 D or less, 3 D or less, 2.5 D or less, 2 D or less, or 1.9 D or less or so. The dipole moments of solvents are known for each solvent.

As the binder included in the slurry, an appropriate one of the above-described types of binders may be selected and used. In order to achieve a desired dispersion state in the solvent, it may be necessary to use a binder having a solubility parameter of about 10 to 30 MPa$^{1/2}$ or so as the binder. In another example, the solubility parameter may be 11 MPa$^{1/2}$ or more, 12 MPa$^{1/2}$ or more, 13 MPa$^{1/2}$ or more, 14 MPa$^{1/2}$ or more, 15 MPa$^{1/2}$ or more, or 16 MPa$^{1/2}$ or more, or may be 28 MPa$^{1/2}$ or less, 26 MPa$^{1/2}$ or less, 24 MPa$^{1/2}$ or less, 22 MPa$^{1/2}$ or less, 20 MPa$^{1/2}$ or less, or 18 MPa$^{1/2}$ or less. The solubility parameter of such a binder can be confirmed through the literature (e.g., Yanlong Luo et al., 2017, etc.). For example, among the above-mentioned types of binders, a type having the solubility parameter as above may be selected.

A particulate binder may be used as the binder, and for example, it may be advantageous for achieving the desired dispersion state by using a binder, in which the average particle diameter (D2) of the binder and the average particle diameter (D1) of the particulate electrode active material exhibit the above-mentioned ratio (D1/D2), or a particulate binder having an average particle diameter within the above-mentioned range.

The content of the binder in the slurry may be controlled in consideration of the desired dispersion state. For example, the binder may be included in the slurry so that the concentration of the binder relative to the solvent (=100×B/(B+S), where B is the weight (g) of the binder in the slurry, and S is the weight (g) of the solvent in the slurry.) is about 0.1 to 10% or so. In another example, the concentration may be 0.5% or more, 1% or more, 1.5% or more, or 2% or more, or may also be 9% or less, 8% or less, 7% or less, 6% or less, 5% or less, 4 weight% or less, 3 weight% or less, or 2.5 weight% or less or so.

The slurry may comprise the electrode active material in addition to the above components. As the electrode active material, an appropriate type may be selected from the above-described types, and in consideration of the contribution to the desired dispersion state, an electrode active material in the form of particles, which has an average particle diameter (D50 particle diameter) in the above-described range and the ratio with the average particle diameter of the binder in the range, may be used.

The ratio of the electrode active material in the slurry may be adjusted so that the ratio of the electrode active material in the active material layer may be achieved.

For example, the electrode active material in the slurry may be included in a ratio within a range of 1000 to 10000 parts by weight relative to 100 parts by weight of the binder. In another example, the ratio may be 1500 parts by weight or more, 2000 parts by weight or more, 2500 parts by weight or more, 3000 parts by weight or more, 3500 parts by weight or more, 4000 parts by weight or more, or 4500 parts by weight or more, or may also be 9500 parts by weight or less, 9000 parts by weight 8500 parts by weight or less, 8000 parts by weight or less, 7500 parts by weight or less, 7000 parts by weight or less, 6500 parts by weight or less, 6000 parts by weight or less, 5500 parts by weight or less, 5000 parts by weight or less, 4500 parts by weight or less, 4000 parts by weight or less, 3500 parts by weight or less, 3000 parts by weight or less, or 2500 parts by weight or less or so.

In addition to the above components, the slurry may also comprise other components including the above-described conductive material, thickener, and the like, depending on the purpose.

Such a slurry may be applied on the surface of the current collector. In this process, the coating method is not particularly limited, and a known coating method, for example, a method such as spin coating, comma coating, or bar coating may be applied.

Surface characteristics of the current collector to which the slurry is applied may be controlled.

The current collector surface may have, for example, a water contact angle of 25 degrees or less. In another example, the water contact angle may be within a range of 24 degrees or less, 23 degrees or less, 22 degrees or less, or 21 degrees or less, and/or 1 degree or more, 2 degrees or more, 3 degrees or more, 4 degrees or more, 5 degrees or more, 6 degrees or more, 7 degrees or more, 8 degrees or more, 9 degrees or more, 10 degrees or more, 11 degrees or more, 12 degrees or more, 13 degrees or more, 14 degrees or more, 15 degrees or more, 16 degrees or more, 17 degrees or more, 18 degrees or more, or 19 degrees or more. The water contact angle can be measured in the manner described in Examples.

The current collector surface may also have, for example, a surface energy of 40 mN/m or more. In another example, the surface energy may be 45 mN/m or more, 50 mN/m or more, 55 mN/m or more, 60 mN/m or more, 65 mN/m or more, 70 mN/m or more, or 75 mN/m or more, or may be 200 mN/m or less, 150 mN/m or less, or 100 mN/m or less. The surface energy can be measured in the manner described in Examples.

The current collector surface of the present application may have, for example, a polarity energy of 30 mN/m or more. In another example, the polarity energy may be 32 mN/m or more, 34 mN/m or more, 36 mN/m or more, 38 mN/m or more, 40 mN/m or more, 42 mN/m or more, 44 mN/m or more, 46 mN/m or more, or 48 mN/m or more, or may be 150 mN/m or less, 140 mN/m or less, 130 mN/m or less, 120 mN/m or less, 110 mN/m or less, 100 mN/m or less, 90 mN/m or less, 80 mN/m or less, 70 mN/m or less, or 60 mN/m or less.

The current collector surface of the present application may have, for example, a dispersion energy of 40 mN/m or less. In another example, the dispersion energy may be 38 mN/m or less, 36 mN/m or less, 34 mN/m or less, 32 mN/m or less, 30 mN/m or less, or 28 mN/m or less, or may be 5 mN/m or more, 10 mN/m or more, 15 mN/m or more, 20 mN/m or more, or 25 mN/m or more.

Here, the surface energy, dispersion energy, and polarity energy are physical quantities obtainable by a WORK (Owens-Wendt-Rabel-Kaelble) method based on the water contact angle and the DM contact angle.

The above-mentioned electrode active material layer is applied to the current collector surface satisfying at least one of, two or more of, or all the surface characteristics, whereby it is possible to provide an electrode having a desired binder distribution or the like.

Among the above-described current collectors, the current collector having such surface characteristics may also be selected, and if necessary, an additional treatment may also be performed to control the surface characteristics of the current collector.

Currently, the kind of the applied treatment is not particularly limited. Various treatment methods capable of controlling the surface characteristics of the current collector surface are known in the industry.

As the suitable treatment method, a so-called plasma method may be exemplified. As is known, the plasma is a state in which electrons and ions formed by applying energy to a gas exist, and the water contact angle, surface energy, polarity energy and/or dispersion energy of the surface of the current collector, and the like may be controlled by exposure to the plasma.

The plasma treatment may be performed, for example, by exposing the current collector to plasma generated by applying a voltage while injecting air or oxygen together with an inert gas into the processing space. At this time, the type of the applicable inert gas is not particularly limited, but may be exemplified by, for example, argon gas, nitrogen gas and/or helium gas, and the like, and may be exemplified by, preferably, argon gas.

The air or oxygen may be injected, for example, at a flow rate of about 0.01 to 2 LPM. The injection flow rate may also be adjusted in the range of 0.02 LPM or more, 0.03 LPM or more, 0.04 LPM or more, 0.05 LPM or more, 0.06 LPM or more, 0.07 LPM or more, 0.08 LPM or more or 0.09 LPM or more and/or in the range of 1.5 LPM or less, 1 LPM or less, 0.9 LPM or less, 0.8 LPM or less, 0.7 LPM or less, 0.6 LPM or less, 0.5 LPM or less, 0.4 LPM or less, 0.3 LPM or less, or 0.2 LPM or less.

Also, the inert gas, for example, argon (Ar), may be injected at a flow rate within a range of about 0.1 to 30 LPM. The injection flow rate may also be adjusted within the range of 0.5 LPM or more, 1 LPM or more, 1.5 LPM or more, 2 LPM or more, 2.5 LPM or more, 3 LPM or more, 3.5 LPM or more, 4 LPM or more, 4.5 LPM or more, 5 LPM or more, or 5.5 LPM or more and/or within the range of 25 LPM or less, 20 LPM or less, 15 LPM or less, 10 LPM or less, 9 LPM or less, 8 LPM or less, or 7 LPM or less.

In addition, the ratio (I/O) of the injection flow rate (I) of the inert gas to the injection flow rate (O) of oxygen or air at the time of the treatment may be controlled, for example, within a range of 10 to 1000. In another example, the ratio (I/O) may be 15 or more, 20 or more, 25 or more, 30 or more, 35 or more, 40 or more, 45 or more, 50 or more, 55 or more, or may be 900 or less, 800 or less, 700 or less, 600 or less, 500 or less, 400 or less, 300 or less, 200 or less, 100 or less, 90 or less, 80 or less, or 70 or less.

The injection flow rates of oxygen or air and inert gas may affect the partial pressure of each gas in the processing space, and thus determine the state of the generated plasma. In the present application, it is possible to efficiently generate plasma capable of forming a current collector having the desired surface characteristics by controlling the injection flow rate at the above level.

In a suitable example, only the oxygen (and/or air) and the inert gas may be injected into the processing space during the plasma treatment.

The plasma treatment may be performed, for example, under conditions of power in a range of 100W to 300W. In another example, the power may be 110 W or more, 120 W or more, 130 W or more, 140 W or more, 150 W or more, or 160 W or more, or may be 290 W or less, 280 W or less, 270 W or less, 260 W or less, 250 W or less, 240 W or less, 230 W or less, 220 W or less, 210 W or less, 200 W or less, 190 W or less, or 180 W or less.

When the plasma treatment is performed in a continuous process such as a roll-to-roll process, the exposure time may be controlled by adjusting the moving speed of the current collector. For example, when the plasma treatment is performed while moving the current collector into the processing space at a constant speed, the moving speed of the current collector may be controlled within a range of, for example, about 1 to 100 mm/sec. In another example, the moving speed may be further adjusted in the range of about 3 mm/sec or more, about 5 mm/sec or more, about 7 mm/sec or more, or 9 mm/sec or more and/or in the range of 95 mm/sec or less, 90 mm/sec or less, 85 mm/sec or less, 80 mm/sec or less, 75 mm/sec or less, 70 mm/sec or less or less, 65 mm/sec or less, 60 mm/sec or less, 55 mm/sec or less, 50 mm/sec or less, 45 mm/sec or less, 40 mm/sec or less, 35 mm/sec or less, 30 mm/sec or less, 25 mm/sec or less, 20 mm/sec or less, 15 mm/sec or less, or 13 mm/sec or less.

By controlling the moving speed of the current collector within the above range, the desired exposure time can be achieved.

The exposure time (T) of the current collector to the plasma at the time of the plasma treatment may be controlled to about 0.1 seconds to about 20 seconds or so. In another example, the plasma treatment time (T) may be 0.5 seconds or more, 1 second or more, 1.5 seconds or more, 2 seconds or more, 2.5 seconds or more, 3 seconds or more, 3.5 seconds or more, 4 seconds or more, 4.5 seconds or more, 5 seconds or more, or 5.5 seconds or more, or 19 seconds or less, 18 seconds or less, 17 seconds or less, 16 seconds or less, 15 seconds or less, 14 seconds or less, 13 seconds or less, 12 seconds or less, 11 seconds or less, 10 seconds or less, 9 seconds or less, or 8 seconds or less.

In the present application, for example, the physical properties of the current collector surface can be controlled to desired levels according to the plasma treatment as described above.

After a slurry is applied to the current collector surface whose surface characteristics are adjusted, a drying process of the slurry may be performed. Although the conditions that the drying process is performed are not particularly limited, it may be appropriate to adjust the drying temperature within a range of about 40°C to 400°C in consideration of the desired position of the binder, and the like. In another example, the drying temperature may be about 45°C or more, about 50°C or more, about 55°C or more, about 60°C or more, about 65°C or more, or about 70°C or more or so, or may also be about 380°C or less, about 360°C or less, about 340°C or less, about 320°C or less, about 300°C or less, about 280°C or less, about 260°C or less, about 240°C or less, about 220°C or less, about 200°C or less, about 180°C or less, about 160°C or less, about 150°C or less, about 140°C or less, about 130°C or less, about 120°C or less, about 110°C or less, about 100°C or less, about 90°C or less, or about 80°C or less or so.

The drying time may also be controlled in consideration of the dispersion state considering the desired position of the binder, and the like, and may be adjusted, for example, within a range of about 1 minute to 30 minutes. In another example, the time may also be further controlled within the range of about 2 minutes or more, about 3 minutes or more, about 4 minutes or more, about 5 minutes or more, about 6 minutes or more, about 7 minutes or more, about 8 minutes or more, or about 9 minutes or more and/or within the range of about 25 minutes or less, about 20 minutes or less, or about 15 minutes or less.

Following the drying process, a rolling process may be performed. In this case, the position of the binder, and the like may be adjusted even by the rolling conditions (e.g., pressure during rolling, etc.).

For example, the rolling may be performed such that the porosity of the rolled slurry (active material layer) falls within the above-described range.

The thickness of the rolled slurry (i.e., the active material layer) is within the thickness range of the active material layer as described above.

During the manufacturing process of the electrode of the present application, necessary additional processes (e.g., cutting process, etc.) may also be performed in addition to the slurry coating, drying, and rolling.

The present application also relates to an electrochemical element comprising such an electrode, for example, a secondary battery.

The electrochemical element may comprise the electrode as a positive electrode and/or a negative electrode. If the electrode of the present application is used as the negative electrode and/or the positive electrode, other configurations or manufacturing methods of the electrochemical element are not particularly limited, and a known method may be applied.

**Advantageous Effects**

The present application relates to an electrode comprising a current collector and an active material layer, which can provide an electrode capable of securing a high level of interparticle adhesion force and adhesion force between the active material layer and the current collector relative to the binder content in the active material layer. Through this, it is also possible to provide a secondary battery having excellent performance, and the like while having a high capacity.

**Description of Drawings**

Figure 1 is a cross-sectional diagram of an exemplary electrode of the present application.

Figure 2 is a conceptual diagram of a formation state of an active material layer in the prior art.

Figure 3 is a conceptual diagram of a state where a standard peel test is performed.

Figure 4 is a wave graph showing binder occupied area ratios measured for each position in Example 1.

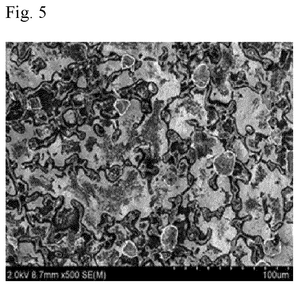

Figure 5 is an image obtained by photographing the binder behavior in Region A (one example of a crest portion of the wave graph) of Figure 4 (photographed after a standard peel test).

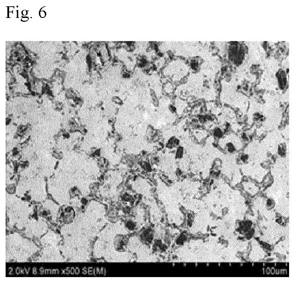

Figure 6 is an image obtained by photographing the binder behavior in Region B (one example of a valley portion in the wave graph) of Figure 4 (photographed after a standard peel test).

Figure 7 is an image obtained by photographing the active material behavior in Region A (one example of a crest portion of the wave graph) of Figure 4 (photographed after measuring adhesion force).

Figure 8 is an image obtained by photographing the active material behavior in Region B (one example of a valley portion in the wave graph) of Figure 4 (photographed after measuring adhesion force).

Figure 9 is a graph showing binder occupied area ratios measured for each position in Comparative Example 1.

Figure 10 is an image obtained by photographing the binder behavior in Region C of Figure 9 (photographed after a standard peel test).

Figure 11 is an image obtained by photographing the active material behavior in Region C of Figure 9 (photographed after measuring adhesion force).

Figure 12 is a graph showing binder occupied area ratios measured for each position in Comparative Example 2.

Figure 13 is an image obtained by photographing the binder behavior in Region D of Figure 12 (photographed after a standard peel test).

Figure 14 is an image obtained by photographing the active material behavior in Region D of Figure 12 (photographed after measuring adhesion force).

Figure 15 is a graph showing binder occupied area ratios measured for each position in Comparative Example 3.

Figure 16 is an image obtained by photographing the binder behavior in Region E of Figure 15 (photographed after a standard peel test).

Figure 17 is an image obtained by photographing the active material behavior in Region E of Figure 15 (photographed after measuring adhesion force).

Figure 18 illustrates an image photographing method of binder behavior and active material behavior.

[Explanation of Reference Numerals]

100:      current collector
200:      active material layer
300:      Scotch Magic tape
1001:     electrode active material
2001:     binder

**Mode for Invention**

Hereinafter, the present application will be described in more detail through Examples and Comparative Examples, but the scope of the present application is not limited to the following Examples.

**1. Measurement of water contact angle and surface energy**

The water contact angle was measured by a tangent angle method by dropping 3 $\mu$l drops at a rate of 3$\mu$l/s using a drop shape analyzer device (manufacturer: KRUSS, trade name: DSA100). Water and DM (diiodomethane) were dropped in the same way, and the surface energy was calculated by an OWRK (Owens-Wendt-Rabel-Kaelble) method.

**2. Confirmation of average particle diameters (D50 particle diameters) of particulate binder and electrode active material**

The average particle diameters (D50 particle diameters) of the particulate binder and the electrode active material were measured with Marvern's MASTERSIZER3000 equipment in accordance with ISO-13320 standard. Upon the measurement, water was used as a solvent. When a particulate binder or the like is dispersed in the solvent and irradiated with lasers, the lasers are scattered by the binder dispersed in the solvent, and the intensities and directionality values of the scattered lasers vary depending on the size of the particles, so that it is possible to obtain the average diameter by analyzing these with the Mie theory. Through the above analysis, a volume-based cumulative graph of the particle size distribution was obtained through conversion to the diameters of spheres having the same volume as that of the dispersed binder, and the particle diameter (median diameter) at 50% cumulative of the graph was designated as the average particle diameter (D50 particle diameter).

**Example 1.**

A copper foil (Cu foil) with a thickness of 8$\mu$m was used as a current collector, and after adjusting the surface energy and the water contact angle by argon (Ar) plasma treatment as follows, it was applied to the manufacture of the electrode.
The copper foil was exposed to the plasma, which was generated by applying a power of 170W while injecting argon (Ar) into the chamber at a flow rate of 6 LPM, and injecting oxygen ($O_2$) at a flow rate of 0.1 LPM, for 6 seconds while being transferred at a speed of about 10mm/sec to perform the argon plasma treatment.
After the above operation, the surface energy of the current collector surface was measured in the manner described in Evaluation Example 1 above. As a result of the measurement, the surface energy was 77.7 mN/m, the polarity energy was 50.1 mN/m, and the dissipation energy was 27.6 mN/m. In addition, the water contact angle on the current collector surface after the above operation was 20 degrees.
As the slurry, a slurry comprising water, an SBR (styrene-butadiene rubber) binder, a thickener (CMC, carboxymethyl cellulose), and an electrode active material (1) (artificial graphite (GT), average particle diameter (D50 particle diameter): 20 $\mu$m) and an electrode active material (2) (natural graphite (PAS), average particle diameter (D50 particle diameter): 15 $\mu$m) in a weight ratio of 48.5: 1: 0.5: 45: 5 (water: SBR: CMC: active material (1): active material (2)) was used.

Here, the water is a solvent having a dipole moment of about 1.84 D or so, and the SBR binder is a binder having a solubility parameter of about 16.9 MPa$^{1/2}$ or so. The solubility parameter of the SBR binder is the value described in Yanlong Luo et al., 2017. In addition, the SBR binder was a particulate binder, which had an average particle diameter (D50 particle diameter, median particle diameter) of about 150 nm or so.

Subsequently, the slurry was applied to a thickness of about 280 $\mu$m on the current collector surface treated with argon plasma by a gap coating method, and dried at a temperature of about 75°C for about 10 minutes.

After drying, the thickness of the slurry was about 180 $\mu$m or so, and the dried slurry layer was rolled with a conventional electrode rolling mill to have a final thickness of about 110$\mu$m or so and a porosity of about 26% or so, thereby forming an active material layer.

The porosity of the active material layer is a value calculated by a method of comparing the ratio of the difference between the real density and the density after rolling. In addition, when considering the compositions of the slurry, the content of the SBR binder in the active material layer of the electrode is about 1.94 weight% or so, and the content of the electrode active material is about 97 weight% or so.

**Comparative Example 1.**

An electrode was manufactured in the same manner as in Example 1, except that an active material layer was formed on a copper foil having a thickness of 8$\mu$m without surface treatment.

As a result of measuring the surface energy of the copper foil surface without the surface treatment in the manner described in Evaluation Example 1 above, the surface energy of the current collector was 71.2 mN/m, the polarity energy was 26.2 mN/m, and the dispersion energy was 45 mN/m. In addition, the water contact angle on the current collector surface after the above operation was 30.1 degrees.

**Comparative Example 2.**

An electrode was manufactured in the same manner as in Example 1, except that an ethyl TMS (ethyl trimethoxylsilane) coating was performed on a copper foil having a thickness of 8$\mu$m.

The ethyl TMS coating was performed by a method of applying a coating liquid obtained by dispersing ethyl TMS in ethanol as a solvent at a concentration of 1 weight% or so on one side of the copper foil to a thickness of about 10$\mu$m, and the coating proceeded using a bar coater. Subsequently, it was annealed at a temperature of about 100°C for about 5 minutes, and washed with ethanol, and then a coating layer was formed through a dry process at a temperature of about 100°C for about 5 minutes.

After the above operation, the surface energy of the ethyl TMS-coated current collector surface was measured in the manner described in Evaluation Example 1 above. As a result of the measurement, the surface energy of the current collector was 29.7 mN/m, the polarity energy was 1.4 mN/m, and the dissipation energy was 28.3 mN/m. In addition, the water contact angle on the current collector surface after the above operation was 95 degrees.

**Comparative Example 3.**

An electrode was manufactured in the same manner as in Example 1, except that atmospheric pressure plasma treatment was performed on a copper foil having a thickness of 8$\mu$m.

The copper foil was exposed to the plasma, which was generated by applying a voltage of 12 kV while injecting nitrogen ($N_2$) into the chamber at a flow rate of 450 LPM, and injecting air at a flow rate of 0.9 LPM, for 2 seconds while being transferred at a speed of about 30mm/sec to perform the atmospheric pressure plasma treatment.

After the above operation, the surface energy of the current collector surface was measured in the manner described in Evaluation Example 1 above. As a result of the measurement, the surface energy of the current collector was 76.8 mN/m, the polarity energy was 44.6 mN/m, and the dissipation energy was 32.2 mN/m. In addition, the water contact angle on the current collector surface after the above operation was 14 degrees.

**Test Example 1. Standard peel test**

After rolling, the electrode was cut into a size of 20mm or so in width and 100mm or so in length to obtain a sample. A standard peel test was performed on the sample. The standard peel test was performed using 3M's Scotch Magic tape Cat. 810R.

On the active material layer of the sample, the Scotch Magic tape Cat. 810R was attached by reciprocating and pushing a roller having a weight of 1kg, a radius of 50mm, and a width of 40mm once. At this time, the Scotch Magic tape was cut to have a width of 10mm or so and a length of 60mm or so, and used, and as shown in Figure 3, the Scotch Magic tape and the electrode active material layer were attached to be crossed to a length of about 20mm or so, and the protruding part was held and peeled off. At this time, the peel rate and the peel angle were set to a speed of about 20mm/sec or so and an angle of about 30 degrees or so. A new scotch tape was replaced and used every time it was peeled off. The above process was repeated until the components of the active material layer did not come out on the surface of the Scotch Magic tape. It was visually observed whether the components of the active material layer came out, and when the tone did not substantially change compared to the unused tape, it was determined that the components of the active material layer did not come out.

**Test Example 2. Confirmation of binder behavior and occupied area ratio for each position**

For the surface of the current collector sample (width: 20mm or so, and length: 100mm or so) obtained after performing the standard peel test, images of binder behavior for each position were photographed using an FE-SEM (field emission scanning electron microscope) device (manufacturer: HITACHI, trade name: S4800).

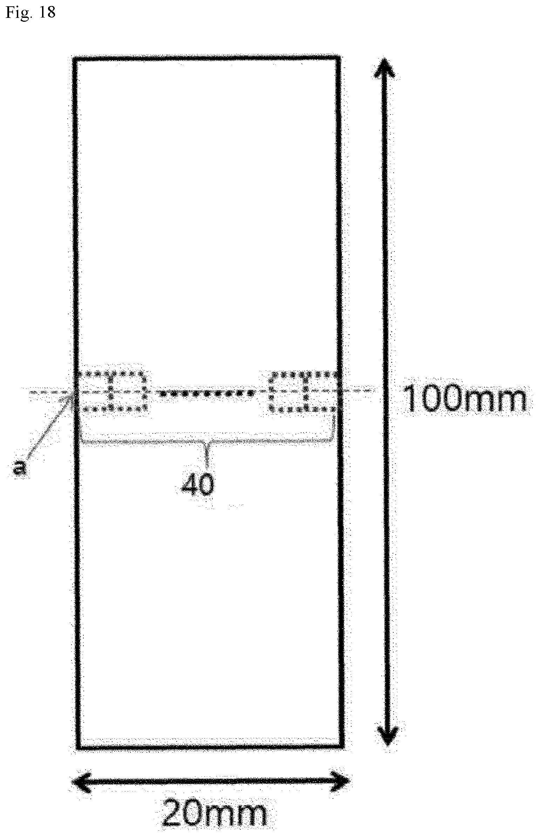

The images were measured in the same manner as in Figure 18. The images were measured by setting a specific point on the sample surface (a in Figure 18) as a starting point. Square regions (squares indicated by blue dotted lines in Figure 18), in which horizontal and vertical lengths were each about 0.5mm or so, were photographed from the starting point toward the right direction so that the respective regions of the sample surface were not overlapped. As a result, 40 images were obtained in total (magnification: 500 times).

Subsequently, for each image, the measurement was performed using the Trainable Weka Segmentation Plug-in of Image J software (manufacturer: Image J), where the region with brightness of 96 or less was set to a region that the binder exists, and the region with brightness of more than 96 was set to a region that the binder does not exist.

In such a method, for each image, the area of the region that the binder exists and the area that the binder does not exist were confirmed, and the binder occupied area ratio was derived through an equation of (area of the region that the binder exists $\times$ 100)/(area of the region that the binder exists + area of the region that the binder does not exist).

Thereafter, a graph of binder occupied area ratios for each position was derived by setting the distance (position) of the measurement region from the starting point as the x-axis and setting the binder occupied area ratio as the y-axis.

The maximum values and minimum values of the binder occupied area ratio in each graph, and the differences between the maximum values and minimum values were shown in Table 1 below.

[Table 1]

|  |  | Example 1 | Comparative Example | | |
|---|---|---|---|---|---|
|  |  |  | 1 | 2 | 3 |
| Binder occupied area ratio (%) | Maximum value | 76.1 | 57.7 | 89.7 | 47.0 |
|  | Minimum value | 46.9 | 53.9 | 82.8 | 38.6 |
| Maximum value - Minimum value (%) | | 26.2 | 3.8 | 6.9 | 8.4 |

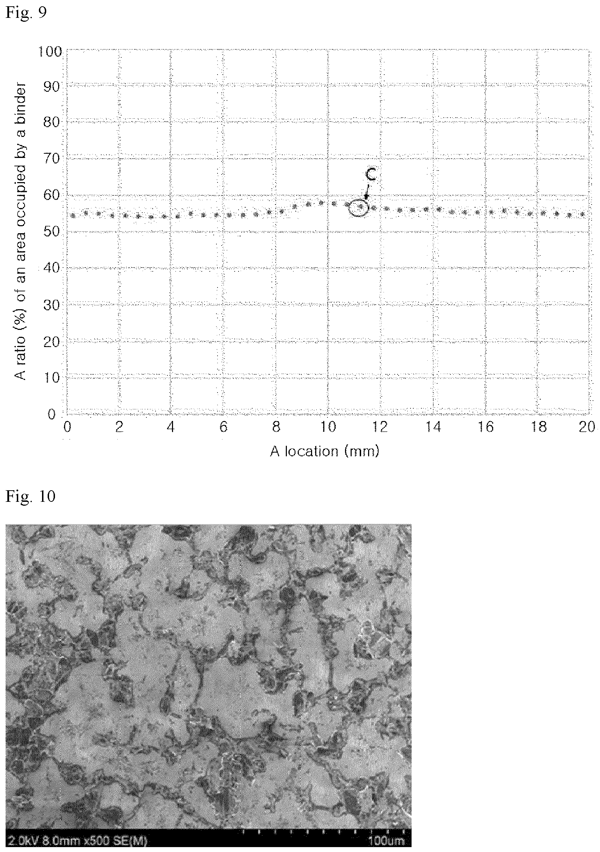

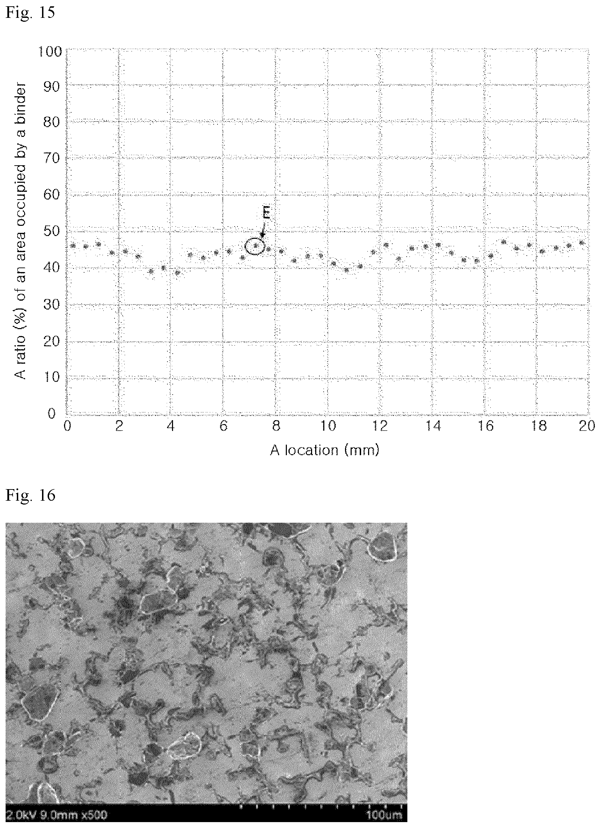

As a result, it could be confirmed that the graph showing the binder occupied area ratios measured for each position in Example 1 was displayed as a wave graph as in Figure 4. At this time, it could be confirmed that the wavelength of the wave graph according to Figure 4 was about 12mm or so, and the difference between the maximum value and the minimum value of the binder occupied area ratio was 26.2%p, thereby being larger than those of Comparative Examples 1 to 3. Meanwhile, the graphs showing the binder occupied area ratios measured for each position in Comparative Examples 1 to 3 were shown in Figures 9, 12, and 15, respectively, whereby the wavelength could not be confirmed.

**Test Example 3. Measurement of adhesion force**

After rolling, the electrode was cut into a size of 20mm or so in width and 100mm or so in length to obtain a sample. For the sample, the adhesion force was measured according to the known method for measuring adhesion force of the active material layer. Upon measuring the adhesion force, the peel angle was 90 degrees, and the peel rate was 5 mm/sec or so. After the measurement, the portions where the peaks were stabilized were averaged and defined as the adhesion force.

For the electrodes of Example and Comparative Examples 1 to 3, the adhesion force measured by the above-described method was described in Table 2 below.

[Table 2]

| | Example 1 | Comparative Example | | |
| --- | --- | --- | --- | --- |
| | | 1 | 2 | 3 |
| Adhesion force (gf/20mm) | 48.7 | 31.5 | 36.9 | 34.7 |

As a result of confirming the adhesion force, it could be confirmed that the adhesion force between the active material layer and the current collector was changed due to the different binder distribution, and the like, even though the content of the SBR binder in the active material layer, the content of the electrode active material, and the like were the same. Particularly, in the case of Example 1 showing the binder behavior as in Figure 4, excellent adhesion force was exhibited compared to Comparative Examples 1 to 3.

**Test Example 4. Confirmation of active material behavior for each position**

For the surface of the current collector sample (width: 20mm or so, and length: 100mm or so) obtained after measuring the adhesion force, images of binder behavior for each position were photographed using a confocal laser spectro microscope (manufacturer: Keyenece, product name: VK-X200).

The images were measured in the same manner as in Figure 18. The images were measured by setting a specific point on the sample surface (a in Figure 18) as a starting point. Square regions (squares indicated by blue dotted lines in Figure 18), in which horizontal and vertical lengths were each about 0.5mm or so, were photographed from the starting point toward the right direction so that the respective regions of the sample surface were not overlapped. As a result, 40 images were obtained in total (magnification: 200 times).

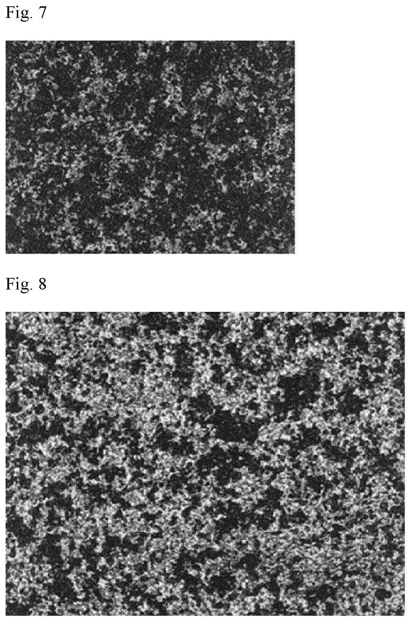

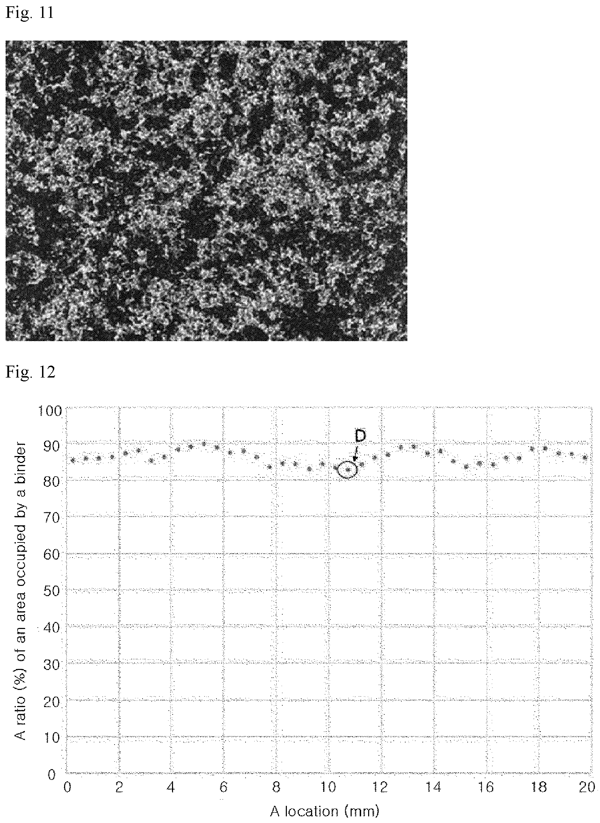

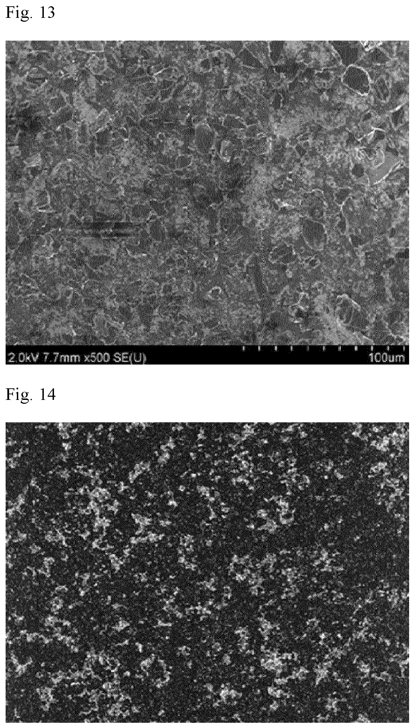

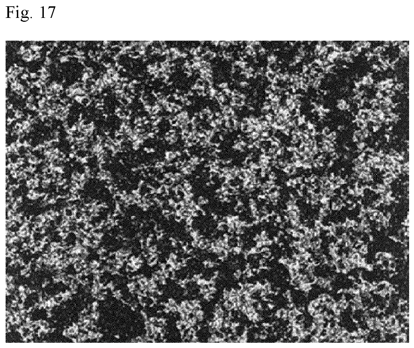

The active material behavior image photographed for Example 1 was shown in Figure 7 (one example of a crest portion in the wave graph) and Figure 8 (one example of a valley portion in the wave graph). In addition, examples of active material behavior images photographed for Comparative Examples 1 to 3 were shown in Figures 11, 14, and 17, respectively.

**Claims**

1.  An electrode, comprising:

    a current collector; and
    an active material layer on one or both sides of the current collector,
    wherein the electrode active material layer comprises an electrode active material and a binder, and
    wherein, after the Standard peel test below, a ratio by a location of an area occupied by the binder, the ratio observed along one direction on the current collector, is shown in a wave graph:
    Standard peel test: a process of attaching a Scotch Magic tape Cat. 810R on the active material layer and then peeling off the Scotch Magic tape Cat. 810R from the active material layer is repeated until no component of the active material layer is observed on the Scotch Magic tape Cat. 810R.

2.  The electrode according to claim 1, wherein the ratio by the location of the area occupied by the binder is 55% or more at a crest portion of the wave graph.

3.  The electrode according to claim 1 or 2, wherein the ratio by the location of the area occupied by the binder is 50% or less at a valley portion of the wave graph.

4.  The electrode according to any one of claims 1 to 3, wherein a wavelength of the wave graph is from 3 nm to 25mm.

5.  The electrode according to any one of claims 1 to 4, wherein a difference between a maximum value of the ratio by the location of the area occupied by the binder in the wave graph and a minimum value of the ratio by the location of the area occupied by the binder in the wave graph is 9%p or more.

6.  The electrode according to any one of claims 1 to 5, wherein, after the Standard peel test, a region which satisfies the Equation 1 below and of which a ratio of an area occupied by the binder is 60% or more exists on the current

collector:

[Equation 1]

$$18 \leq A/W$$

wherein the A is a ratio (unit: %) of the the ratio of the area occupied by the binder of the region and the W is a content (weight%) of the binder in the active material layer.

7. The electrode according to any one of claims 1 to 6, wherein the binder is a particulate binder.

8. The electrode according to any one of claims 1 to 7, wherein both of the electrode active material and the binder are in the forms of particles, and wherein a ratio (D1/D2) of an average particle diameter (D1) of the electrode active material relative to an average particle diameter (D2) of the binder is from 10 to 1000.

9. The electrode according to any one of claims 1 to 8, wherein the binder is a particulate binder having an average particle diameter in a range of 50 nm to 500 nm.

10. The electrode according to any one of claims 1 to 9, wherein the electrode active material is a particulate material having an average particle diameter in a range of 1 $\mu$m to 100 $\mu$m.

11. The electrode according to any one of claims 1 to 10, wherein a ratio of the binder in the active material layer is from 0.5 weight% to 10 weight%.

12. The electrode according to any one of claims 1 to 11, wherein the electrode active material is comprised in an amount of 1000 to 10000 parts by weight relative to 100 parts by weight of the binder.

13. A method for manufacturing the electrode of any one of claim 1 to 12, comprising

forming a layer of a slurry on the current collector,
wherein the slurry comprises a solvent, a binder having a solubility parameter in a range of 10 to 30 MPa$^{1/2}$ and an electrode active material, and
wherein the current collector surface on which the layer of the slurry is formed has a surface energy of 40 mN/m or more.

14. An electrochemical element, comprising:
the electrode of any one of claims 1 to 12 as a negative electrode or a positive electrode.

15. A secondary battery, comprising:
the electrode of any one of claims 1 to 12 as a negative electrode or a positive electrode.

Fig. 1

| 200 |
| :---: |
| 100 |

Fig. 2

Fig. 3

Fig. 4

Fig. 5

Fig. 6

Fig. 7

Fig. 8

Fig. 9

Fig. 10

Fig. 11

Fig. 12

Fig. 13

2.0kV 7.7mm x500 SE(U)       100um

Fig. 14

Fig. 15

Fig. 16

Fig. 17

Fig. 18

## INTERNATIONAL SEARCH REPORT

| International application No. |
|---|
| **PCT/KR2022/001660** |

| A. | CLASSIFICATION OF SUBJECT MATTER |
|---|---|

**H01M 4/13**(2010.01)i; **H01M 4/62**(2006.01)i; **H01M 4/133**(2010.01)i; **H01M 4/04**(2006.01)i; **H01M 4/139**(2010.01)i; **H01M 4/66**(2006.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/13(2010.01); H01M 10/058(2010.01); H01M 10/36(2006.01); H01M 4/02(2006.01); H01M 4/04(2006.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극(electrode), 전류 집전체(current collector), 전극 활물질층(electrode active material layer), 박리 시험(peel test), 바인더(binder), 접착력(adhesion), 플라즈마 처리(plasma treatment)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 5522487 B2 (TOYOTA MOTOR CORP.) 18 June 2014 (2014-06-18)<br>See paragraphs [0020]-[0023], [0025], [0026], [0036], [0046], [0050], [0058] and [0080]-[0090]; and figures 1 and 5. | 1-3 |
| X | KR 10-2016-0033482 A (LG CHEM, LTD.) 28 March 2016 (2016-03-28)<br>See claims 1-7; paragraphs [0029], [0034], [0035], [0059] and [0062]; and example 1. | 1-3 |
| A | KR 10-2017-0042175 A (LG CHEM, LTD.) 18 April 2017 (2017-04-18)<br>See entire document. | 1-3 |
| A | US 2009-0098457 A1 (KWON, M.-S. et al.) 16 April 2009 (2009-04-16)<br>See entire document. | 1-3 |
| A | JP 2018-073645 A (TOYOTA MOTOR CORP.) 10 May 2018 (2018-05-10)<br>See entire document. | 1-3 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 May 2022** | **09 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2022/001660** |

| Box No. II | Observations where certain claims were found unsearchable (Continuation of item 2 of first sheet) |
| --- | --- |

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☑ Claims Nos.: **4-15**
because they are dependent claims and are not drafted in accordance with the second and third sentences of Rule 6.4(a).

Form PCT/ISA/210 (continuation of first sheet) (July 2019)

**INTERNATIONAL SEARCH REPORT**
Information on patent family members

International application No.

**PCT/KR2022/001660**

| Patent document cited in search report | | | Publication date (day/month/year) | Patent family member(s) | | | Publication date (day/month/year) |
|---|---|---|---|---|---|---|---|
| JP | 5522487 | B2 | 18 June 2014 | CN | 102106020 | A | 22 June 2011 |
| | | | | CN | 102106020 | B | 09 October 2013 |
| | | | | CN | 102272982 | A | 07 December 2011 |
| | | | | CN | 102272982 | B | 11 June 2014 |
| | | | | EP | 2330663 | A1 | 08 June 2011 |
| | | | | EP | 2330663 | B1 | 26 September 2018 |
| | | | | EP | 2461396 | A1 | 06 June 2012 |
| | | | | EP | 2461396 | B1 | 06 May 2020 |
| | | | | JP | 5445871 | B2 | 19 March 2014 |
| | | | | US | 2012-0115027 | A1 | 10 May 2012 |
| | | | | US | 2012-0135304 | A1 | 31 May 2012 |
| | | | | US | 8343656 | B2 | 01 January 2013 |
| | | | | US | 9159986 | B2 | 13 October 2015 |
| | | | | WO | 2011-013413 | A1 | 03 February 2011 |
| | | | | WO | 2011-013414 | A1 | 03 February 2011 |
| KR | 10-2016-0033482 | A | 28 March 2016 | None | | | |
| KR | 10-2017-0042175 | A | 18 April 2017 | CN | 107925130 | A | 17 April 2018 |
| | | | | CN | 107925130 | B | 31 July 2020 |
| | | | | JP | 2018-524784 | A | 30 August 2018 |
| | | | | JP | 6581286 | B2 | 25 September 2019 |
| | | | | KR | 10-1982571 | B1 | 27 May 2019 |
| | | | | US | 10663528 | B2 | 26 May 2020 |
| | | | | US | 2018-0210034 | A1 | 26 July 2018 |
| | | | | WO | 2017-061830 | A1 | 13 April 2017 |
| US | 2009-0098457 | A1 | 16 April 2009 | KR | 10-2009-0038309 | A | 20 April 2009 |
| JP | 2018-073645 | A | 10 May 2018 | JP | 6766596 | B2 | 14 October 2020 |

Form PCT/ISA/210 (patent family annex) (July 2019)

**EP 4 287 300 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210013324
- KR 1020210013322